# FASCICULE DE BREVET EUROPEEN

(11) **EP 2 469 066 B1**
(45) Date de publication et mention de la délivrance du brevet: **25.01.2017**
(21) Numéro de dépôt: 11192195.3
(22) Date de dépôt: 06.12.2011
(51) Int. Cl.: F02M 35/14, F02M 35/10, F02M 35/104, F02B 29/04, F02M 26/17

(54) **Collecteur de répartition de gaz dans des conduits d'admission d'un moteur thermique**
Kollektor zur Gasverteilung in die Zuführleitungen einer Wärmekraftmaschine eines Kraftfahrzeugs, und mit einem solchen Kollektor ausgestattetes Zuführmodul
Manifold for distributing gas in the intake ducts of a heat engine of an automobile and intake module provided with such a manifold

(30) Priorité: 21.12.2010 FR 1060933
(43) Date de publication de la demande: 27.06.2012
(73) Titulaire: Valeo Systèmes Thermiques, 78320 Le Mesnil-Saint-Denis (FR)
(72) Inventeur: Bourgoin, Guillaume, 87000 Limoges (FR); Martins, Carlos, 78150 Le Chesnay (FR)
(74) Mandataire: Gevers & Orès

(56) Documents cités:
- EP-A1- 2 278 138
- EP-A2- 2 098 716
- EP-A2- 2 161 429
- DE-A1- 4 235 075
- FR-A1- 2 946 698
- JP-A- 2000 192 858
- JP-A- 2005 256 679
- US-A1- 2009 293 831

## Description

Module d'admission équipé d'un collecteur de répartition de gaz dans des conduits d'admission d'un moteur thermique de véhicule automobile.

L'invention concerne un module d'admission équipé d'un collecteur de répartition de gaz dans des conduits d'admission d'un moteur thermique de véhicule automobile et un module d'admission équipé d'un tel collecteur.

Un moteur thermique de véhicule automobile comporte une chambre de combustion, généralement formée par une pluralité de cylindres, dans laquelle un mélange d'air et de carburant est brûlé pour générer le travail du moteur. Les gaz admis dans la chambre de combustion, qui comprennent l'air, sont dénommés gaz d'admission.

Dans le cas de moteur suralimenté, c'est-à-dire alimenté en air préalablement comprimé, ces gaz d'admission doivent être refroidis avant d'être introduits dans la chambre de combustion. Cette fonction est remplie par un échangeur de chaleur, appelé généralement refroidisseur d'air de suralimentation.

Dans certaines phases de fonctionnement du moteur, il est cependant nécessaire d'éviter un refroidissement des gaz d'admission. Il a ainsi déjà été proposé des circuits faisant dérivation et permettant au gaz d'admission de ne pas passer par l'échangeur avant leur introduction dans le moteur.

Afin de réduire les émissions polluantes, il est également connu d'introduire dans le flux de gaz d'admission des gaz d'échappement dits "recirculés". Il s'agit de gaz d'échappement prélevés en aval de la chambre de combustion pour être réacheminés (recirculés) vers le flux de gaz d'admission, en amont de la chambre de combustion. Pour cela, différentes architecture on déjà été proposées.

Dans le cas de moteur équipé d'un turbo-compresseur, c'est-à-dire d'un compresseur, comprimant les gaz d'admission, entrainé par une turbine actionnée par les gaz d'échappement, une première solution consiste à prélever les gaz en amont de la turbine et à les injecter en aval du refroidisseur. On parle alors de boucle de recirculation de gaz d'échappement haute pression.

Il est également conu des architectures, dite basse pression, selon lesquels les gaz d'échappement sont prélevés en aval du compresseur et injecté en amont de l'échangeur.

Dans un tel cas de figure, les gaz d'admission traversant l'échangeur comprennent non seulement de l'air frais mais également des gaz d'échappement. On peut alors assister à l'apparition en sortie de l'échangeur de condensats fortement corrosifs. Différentes solutions ont déjà été proposées pour éviter la formation ou limiter les effets de ces condensats.

Cela étant, il peut être souhaitable de rapprocher au plus prêt le refroidisseur d'air de suralimentation du moteur par l'intermédiaire d'un collecteur de répartition par lequel le refroidisseur d'air de suralimentation est raccordée au moteur. Les différentes solutions déjà proposées pour éliminer les condensats ne tiennent toutefois pas compte d'une telle topologie, ou ne présentent pas de solution particulière pour évacuer correctement les condensats, comme cela est le cas dans le document EP 2 161 429.

L'invention se propose de résoudre les problèmes précités et propose à cette fin un module d'admission de gaz dans un moteur thermique de véhicule automobile, comprenant un échangeur de chaleur et un collecteur de répartition des gaz. Ledit collecteur comprend un carter, apte à être monté sur le moteur et définissant un volume de passage d'un flux de gaz d'admission vers le moteur, ledit carter présentant des orifices débouchant, communiquant avec ledit volume de passage. Ledit carter est configuré pour permettre un écoulement de condensats en direction desdits orifices, appelés orifices d'écoulement, sous l'action de la gravité. Le carter comprend une entrée, dite entrée pour les gaz d'admission non-refroidis, ledit collecteur est rendu apte à autoriser une introduction de gaz d'admission, dits gaz d'admission non-refroidis, dans une partie inférieure du volume de passage depuis ladite entrée pour les gaz d'admission non-refroidis, et le carter présente une partie, dite de drainage, configurée pour favoriser un écoulement des condensats vers les orifices d'écoulement plutôt que vers l'entrée pour les gaz d'admission non-refroidis. L'entrée pour les gaz d'admission non-refroidis comprend une pluralité de lumières débouchant dans le volume de passage pour l'introduction dans celui-ci des gaz d'admission non-refroidis, au niveau de ladite partie de drainage. La partie de drainage est munie de rigoles s'étendant depuis les lumières vers les orifices d'écoulement.

On dispose ainsi d'une solution simple permettant l'évacuation des condensats, y compris dans des configurations où ceux-ci sont présents et/ou formés à proximité du moteur.

Selon un aspect de l'invention, le carter comprend une pluralité d'orifices de sortie des gaz d'admission vers le moteur, dits orifices d'admission, et lesdits orifices d'écoulement sont constitués par tout ou partie des orifices d'admission. Autrement dit, les condensats sont évacués vers le moteur où ils sont vaporisés. On réduit encore de la sorte les problèmes posés par les condensats qui n'ont pas à être récoltés et stockés.

Selon différents aspects de l'invention, pris ensemble ou séparément:
- le collecteur est configuré pour que, en utilisation, les lumières débouchent dans le volume de passage à un niveau supérieur à celui des orifices d'écoulements,
- les lumières sont réparties de façon linéaire en étant espacées entre elles et lesdites rigoles s'étendent en direction des orifices d'écoulement depuis un espace prévu entre lesdites lumières,
- les lumières sont bordées de collets saillants à l'intérieur du volume de passage,
- ledit carter comprend une autre entrée pour les gaz d'admission, dite entrée pour les gaz d'admission refroidis, débouchant dans ledit volume de passage,
- le collecteur est configuré pour que, en utilisation, ladite entrée pour les gaz d'admission refroidis soit située au dessus de ladite partie de drainage,
- le collecteur comprenant en outre un conduit d'injection pour injecter un flux de gaz d'échappement recirculés dans le flux de gaz d'admission,
- le carter comprend un ou des orifices d'entrée de gaz d'échappement recirculés, prévus sur une face opposée aux orifices d'écoulement,
- le carter comprend des conduits faisant saillie extérieurement et les orifices d'admission sont situés à l'extrémité débouchante de tout ou partie desdits conduits faisant saillie,
- le carter comprend une face de sortie destinée à se trouver en regard du moteur et le ou les conduits faisant saillie sont issus de la face de sortie du carter de collecteur.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre selon une vue en perspective éclatée un exemple de module d'admission conforme à l'invention,
- la figure 2 est une vue selon un plan de coupe longitudinale du module de la figure 1, la largeur de la feuille représentant l'horizontal,
- la figure 3 est une vue en perspective du collecteur du module des figures précédentes.

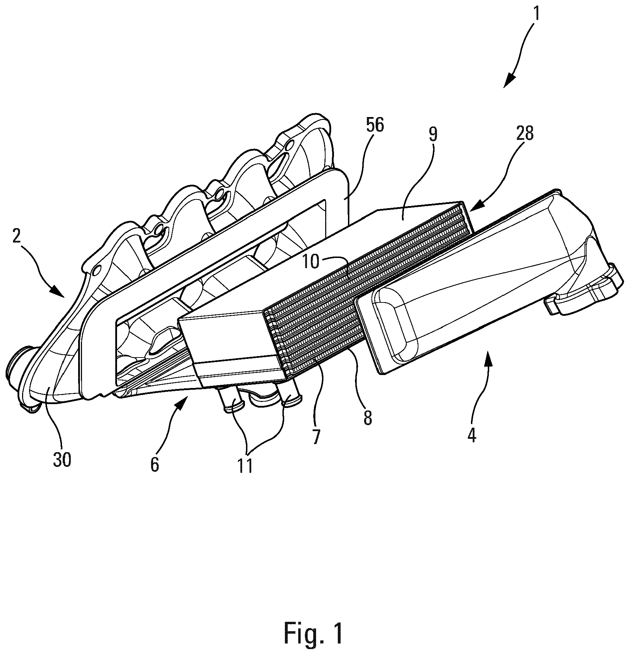

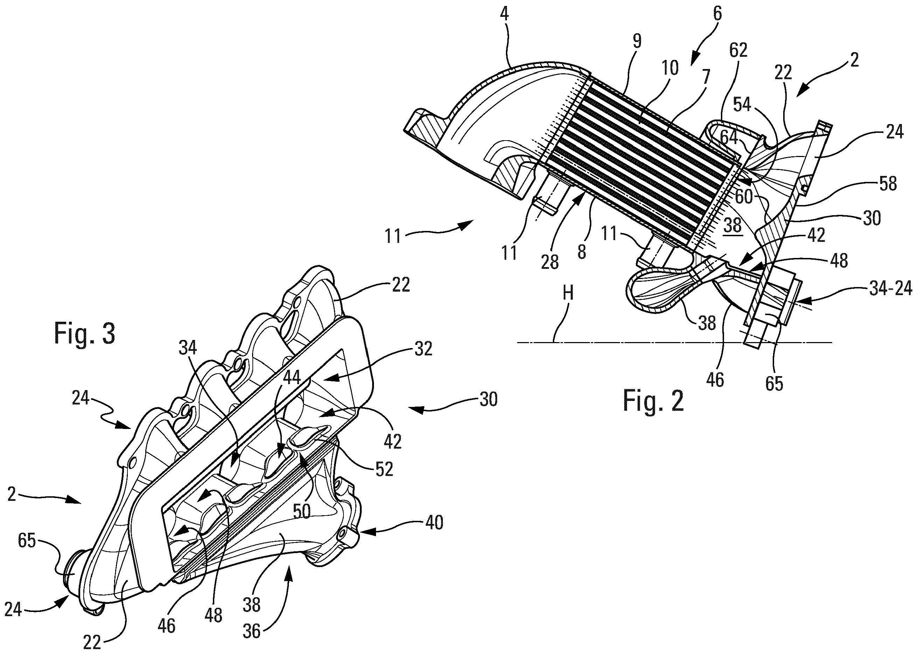

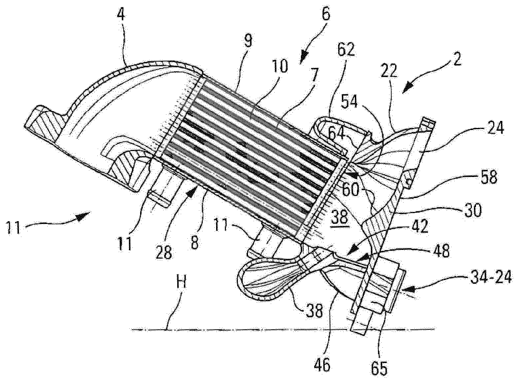

Comme illustré aux figures 1 et 2, le collecteur de répartition 2 conforme à l'invention pourra être employé dans un module d'admission de gaz 1 dans un moteur thermique, non représenté, de véhicule automobile. Ledit module comprend, par exemple, outre le collecteur 1, un échangeur de chaleur 6, notamment un refroidisseur d'air de suralimentation. Cela étant, ledit collecteur pourra également être employé seul en étant directement raccordé à une tubulure d'alimentation en gaz d'admission.

Le module d'admission 2 comprend, par exemple, une boîte d'entrée 4 d'un flux de gaz d'admission dans l'échangeur de chaleur 6.

L'échangeur de chaleur 6 est agencé pour permettre un échange de la chaleur entre un flux de gaz d'admission le traversant et un fluide caloporteur, par exemple un liquide antigel, notamment un mélange d'eau et de glycol. Ledit fluide caloporteur pourra être issu d'une boucle de refroidissement basse température du véhicule.

L'échangeur de chaleur 6 comporte, par exemple, un faisceau d'échange de chaleur formé par une pluralité d'éléments d'échange 7 empilés entre deux plaques d'extrémités, soit une plaque de fond 8 et une plaque de dessus 9. Les espaces entre les éléments d'échange du faisceau forment des canaux 10 de conduite d'un flux de gaz à refroidir, ici les gaz d'admission. Les éléments d'échange du faisceau sont creux et conduisent le fluide caloporteur, destiné à échanger de la chaleur avec le flux de gaz à refroidir circulant dans les canaux de conduite de fluide et ainsi le refroidir. L'échangeur est muni de tubulures d'entrée/sortie 11 permettant au fluide caloporteur de pénétrer et de sortir du faisceau.

L'échangeur de chaleur 6 débouche dans le collecteur de répartition 2 destiné à être relié à la culasse du moteur. Le collecteur de répartition 2 permet une admission répartie, dans la culasse, du flux de gaz issu, notamment, de l'échangeur de chaleur 6.

Avantageusement, ainsi qu'il apparaît clairement à la figure 2, le module d'admission 1 se présente sous la forme d'un module unitaire intégrant, ici, la boîte d'entrée 4, l'échangeur de chaleur 6 et le collecteur de répartition 2 assujettis les uns aux autres. Ce module est ainsi destiné à être fixé, en un seul bloc, sur la culasse du moteur.

Selon un mode de réalisation préféré de l'invention, l'échangeur de chaleur 6 forme l'élément structural du module d'admission 1, c'est-à-dire qu'il agit comme un élément de structure porteur du module d'admission. En particulier, un tel élément, de préférence métallique, possède des caractéristiques mécaniques lui permettant de soutenir les autres éléments du module 1, qui sont rapportés sur lui, avant fixation du module sur le moteur.

L'échangeur comporte, par exemple, un boîtier 28, ouvert vers la boîte d'entrée 4 et le collecteur de répartition 2, à l'intérieur duquel le faisceau d'échange de chaleur est placé. La boîte d'entrée 4 et/ou le collecteur 2 sont assujettis, notamment, audit boîtier 28. Les tubulures d'entrée/sortie 11 pour le fluide caloporteur pourront aussi être fixées audit boîtier 28.

On peut constater que, en utilisation, le module est incliné par rapport à l'horizontal, illustré par le trait repéré H, en direction du moteur. Le collecteur 2 pourra comprendre des moyens de fixation au moteur permettant une fixation avec une telle inclinaison.

Dans l'application prévue, un flux de gaz d'admission comprenant de l'air frais, comprimé ou non et/ou refroidi ou non, et des gaz d'échappement recirculés, refroidis ou non, provenant d'une boucle basse pression, traverse le module en vue de son admission dans une culasse d'un moteur thermique de véhicule automobile. Autrement dit, le collecteur 2 permet la répartition des gaz d'admission dans des conduits d'admission du moteur, en particulier de sa culasse.

Comme plus particulièrement illustré à la figure 3, selon l'invention, ledit collecteur comprend un carter 30, apte à être monté sur le moteur et définissant un volume de passage 32 du flux de gaz d'admission vers le moteur. Ledit carter présente des orifices débouchant 34, communiquant avec ledit volume de passage 32.

Ledit carter est configuré pour permettre un écoulement de condensats en direction desdits orifices 34, appelés orifices d'écoulement, sous l'action de la gravité. On dispose ainsi d'une solution simple d'évacuation des condensats pouvant être mises en oeuvre, y compris dans une configuration où les condensats sont susceptibles d'être présents dans un environnement très proche du moteur.

A ce sujet, le carter comprend une pluralité d'orifices 24 de sortie des gaz d'admission vers le moteur, dits orifices d'admission, et lesdits orifices d'écoulement 34 pourront être constitués par tout ou partie des orifices d'admission 24.

Le carter 30 guide les gaz d'admission jusqu'à la culasse, notamment, par l'intermédiaire de pipes 22, ici au nombre de huit. Et le carter comprend deux groupes distincts d'orifices d'admission 24, ici deux groupes de quatre orifices chacun, un groupe supérieur et un groupe inférieur. Les orifices d'écoulement 34 sont confondus avec les orifices d'admission 24 du groupe inférieur.

Le carter 30 pourra également comprendre une entrée 36, dite entrée pour les gaz d'admission non-refroidis, et ledit collecteur est rendu apte à autoriser une introduction de gaz d'admission, dits gaz d'admission non-refroidis, dans une partie inférieure du volume de passage 32 depuis ladite entrée 36 pour les gaz d'admission non-refroidis. Ladite entrée 36 se présente, par exemple, sous la forme d'une tubulure évasée 38, munie d'un orifice d'entrée 40 pour les gaz d'admission non-refroidi, placée en partie basse du carter 30.

Le carter 30 présente alors une partie 42, dite de drainage, configurée pour favoriser un écoulement des condensats vers les orifices d'écoulement 34 plutôt que vers l'entrée 36 pour les gaz d'admission non-refroidis. Ladite partie 42 définit, par exemple, une paroi inférieure du carter 30.

L'entrée 36 pour les gaz d'admission non-refroidis comprend une pluralité de lumières 44 débouchant dans le volume de passage 32 pour l'introduction dans celui-ci des gaz d'admission non-refroidis, au niveau de ladite partie de drainage 42. Elles présentent, par exemple, une forme oblongue.

Le collecteur pourra être configuré pour que, en utilisation, les lumières 44 débouchent dans le volume de passage 32 à un niveau supérieur à celui des orifices d'écoulements 34. Elles sont situées, par exemple, dans un plan se trouvant, en utilisation, au-dessus du fond des orifices d'écoulement 34.

La partie de drainage 42 est munie, par exemple, de rigoles 46 s'étendant depuis les lumières 44 vers les orifices d'écoulement 34. Lesdites rigoles 46 présentent, notamment, une section en U dans un plan orthogonal aux orifices d'écoulement et tournent leur concavité vers le volume de passage 32. Dans l'exemple illustré, deux dites lumière 44 débouchent dans une même dite rigole 46.

Le carter 30 pourra aussi présenter des nervures 48 situé entre les orifices d'écoulement 34. Elles s'étendent entre ces derniers et les lumières 44 en bordant lesdites rigoles 46 de part et d'autres. Elles tournent leur convexité vers volume de passage 32.

Les lumières 44 sont réparties, par exemple, de façon linéaire en étant espacés entre elles. La ou lesdites rigoles 46 s'étendent en direction des orifices d'écoulement 34 depuis un espace 50 prévu entre lesdites lumières 44.

Lesdites lumières 44 pourront être bordées de collets 52 saillants à l'intérieur du volume de passage 32. Lesdits collets sont prévus, par exemple, sur l'ensemble de la périphérie desdites lumières 44.

Cela étant, si l'on se reporte à nouveau à la figure 2, on constate que le carter 30 pourra comprendre une autre entrée 54 pour les gaz d'admission, dite entrée pour les gaz d'admission refroidis, débouchant dans ledit volume de passage 32.

Autrement dit, le carter 30 comprend une face d'entrée du flux de gaz d'admission dans laquelle débouche la face de sortie du faisceau d'échange de chaleur de l'échangeur 6. Ladite face d'entrée est munie d'une bride d'interface 56 (figure 1) avec l'échangeur 6, entourant l'entrée 54 pour les gaz d'admission refroidis. Le carter 30 comprend aussi, par exemple, une face de sortie 58 destinée à être reliée à la face d'entrée des gaz de la culasse. Ladite face de sortie 58 est munie, par exemple, d'un déflecteur 60 guidant les gaz d'admission vers chacun des groupes d'orifices d'admission 24.

Le collecteur est configuré pour que, en utilisation, ladite entrée 54 pour les gaz d'admission refroidis soit située au dessus de ladite partie de drainage 42.

Dans l'exemple illustré, le collecteur 1 permet le mélange du flux de gaz d'admission, refroidi ou non, et de gaz d'échappement recirculés, refroidis ou non, provenant d'une boucle haute pression, dans le flux de gaz d'admission.

Selon un premier mode de réalisation, le collecteur pourra ainsi comprendre un conduit d'injection pour injecter un flux de gaz d'échappement recirculés.

En variante, tel que cela est illustré, le conduit d'injection 62 est prévu formé au niveau de l'échangeur 6. Il est relié au collecteur 2 par un ou des orifices d'entrée de gaz d'échappement recirculés 64, prévus sur une face du collecteur opposée aux orifices d'écoulement 34, notamment dans la continuité de l'entrée 54 pour les gaz d'admission refroidi. Autrement dit, ladite entrée 54 pour les gaz d'admission et ledit orifice d'entrée 64 pour les gaz d'échappement recirculés sont situés, par exemple, dans un même plan.

Le carter 30 pourra aussi comprendre des conduits 65 faisant saillie extérieurement et tout ou partie des orifices d'admission 24 sont situés à l'extrémité débouchante desdits conduits 65 faisant saillie.

Ces derniers sont destinés à être insérées à l'intérieur des conduits d'admission, prévus dans la culasse en direction des cylindres du moteur. Ils sont prévus, notamment, au niveau des orifices d'admission faisant orifices d'écoulement des condensats. Ces projections 65 permettent d'assurer une étanchéité radiale avec la culasse alors que l'étanchéité sera de type axial au niveau de l'autre groupe d'orifices d'admission 24. Elles sont issues de la face de sortie 58 du carter 30.

A titre d'exemple, ledit carter est réalisé, par exemple, sous la forme d'une pièce de fonderie, notamment en aluminium.

## Revendications

1. Module d'admission (1) de gaz dans un moteur thermique de véhicule automobile, comprenant un échangeur de chaleur (6) et un collecteur de répartition des gaz (2), ledit collecteur comprenant un carter (30), apte à être monté sur le moteur et définissant un volume de passage (32) d'un flux de gaz d'admission vers le moteur, **caractérisé en ce que** ledit carter (30) présente des orifices (34) débouchant, communiquant avec ledit volume de passage (32), ledit carter étant configure pour permettre un écoulement de condensats en direction desdits orifices (34), appelés orifices d'écoulement, sous l'action de la gravite, ledit carter (30) comprenant une entrée (36), dite entrée pour les gaz d'admission non-refroidis,
ledit collecteur étant rendu apte à autoriser une introduction de gaz d'admission, dits gaz d'admission non-refroidis, dans une partie inférieure du volume de passage (32) depuis ladite entrée (36) pour les gaz d'admission, et dans lequel le carter (30) présente une partie (42), dite de drainage, configurée pour favoriser un écoulement des condensats vers les orifices d'écoulement (34) plutôt que vers l'entrée (36) pour les gaz d'admission non-refroidis, l'entrée (36) pour les gaz d'admission non-refroidis comprenant une pluralité de lumières (44) débouchant dans le volume de passage (32) pour l'introduction dans celui-ci des gaz d'admission non-refroidis, au niveau de ladite partie de drainage (42), cette dernière étant munie de rigoles (46) s'étendant depuis les lumières (44) vers les orifices d'écoulement (34).

2. Module d'admission selon la revendication 1 dans lequel le carter (30) comprend une pluralité d'orifices de sortie des gaz d'admission (24) vers le moteur, dits orifices d'admission, et dans lequel lesdits orifices d'écoulement (34) sont constitués par tout ou partie des orifices d'admission (24).

3. Module d'admission selon l'une quelconque des revendications 1 ou 2 configuré pour que, en utilisation, les lumières (44) débouchent dans le volume de passage (32) à un niveau supérieur à celui des orifices d'écoulements (34).

4. Module d'admission selon l'une des revendications précédentes dans lequel les lumières (44) sont réparties de façon linéaire en étant espacés entre elles et lesdites rigoles (46) s'étendent en direction des orifices d'écoulement depuis un espace (50) prévu entre lesdites lumières (44).

5. Module d'admission selon l'une quelconque des revendications précédentes dans lequel les lumières (44) sont bordées de collets (52) saillants à l'intérieur du volume de passage (32).

6. Module d'admission selon l'une quelconque des revendications précédentes dans lequel ledit carter (30) comprend une autre entrée (54) pour les gaz d'admission, dite entrée pour les gaz d'admission refroidis, débouchant dans ledit volume de passage (32).

7. Module d'admission selon la revendication 6 configuré pour que, en utilisation, ladite entrée (54) pour les gaz d'admission refroidis soit située au-dessus de ladite partie de drainage (42).

8. Module d'admission selon l'une quelconque des revendications précédentes comprenant en outre un conduit d'injection (62) pour injecter un flux de gaz d'échappement recirculés dans le flux de gaz d'admission.

9. Module d'admission selon l'une quelconque des revendications précédentes dans lequel le carter (30) comprend un ou des orifices (64) d'entrée de gaz d'échappement recirculés, prévus sur une face opposée aux orifices d'écoulement (34).

10. Module d'admission selon la revendication 2 ou l'une quelconque des revendications 3 à 9 lorsqu'elles dépendent de la revendication 2 dans lequel le carter (30) comprend des conduits (65) faisant saillie extérieurement et tout ou partie des orifices d'admission (24) sont situés à l'extrémité débouchante desdits conduits (65) faisant saillie.

11. Module d'admission selon la revendication 10 dans lequel le carter (30) comprend une face de sortie (58) destinée à se trouver en regard du moteur et le ou les conduits (65) faisant saillie sont issus de la face de sortie (58) du carter de collecteur.

## Patentansprüche

1. Zuführmodul (1) von Gas in eine Wärmekraftmaschine eines Kraftfahrzeugs, umfassend einen Wärmetauscher (6) und einen Kollektor zur Gasverteilung (2), wobei der Kollektor ein Gehäuse (30) aufweist, das geeignet ist, um auf dem Motor angebracht zu werden, und ein Durchgangsvolumen (32) eines Gaseinlassstroms zu dem Motor definiert, **dadurch gekennzeichnet, dass** das Gehäuse (30) mündende Öffnungen (34) aufweist, die mit dem Durchgangsvolumen (32) in Verbindung stehen, wobei das Gehäuse konfiguriert ist, um einen Abfluss der Kondensate in Richtung der Öffnungen (34), die Abflussöffnungen genannt werden, unter der Wirkung der Schwerkraft zu ermöglichen, wobei das Gehäuse (30) einen Einlass (36), den sogenannten Einlass für die ungekühlten Einlassgase, aufweist,
wobei der Kollektor angepasst ist, um ein Einlassen von Einlassgasen, den sogenannten ungekühlten Einlassgasen, in einen unteren Teil des Durchgangsvolumens (32) von dem Einlass (36) für die Einlassgase zu ermöglichen, und wobei das Gehäuse (30) einen Teil (42), den sogenannten Drainageteil, aufweist, der konfiguriert ist, um ein Abfließen der Kondensate zu den Abflussöffnungen (34) statt zu dem Einlass (36) für die ungekühlten Einlassgase zu begünstigen, wobei der Einlass (36) für die ungekühlten Einlassgase mehrere Öffnungen (44), die in das Durchgangsvolumen (32) münden, für das Einleiten der ungekühlten Einlassgase in dieses an dem Drainageteil (42) aufweist, wobei dieser Letztere mit Rinnen (46) versehen ist, die sich von den Öffnungen (44) zu den Abflussöffnungen (34) erstrecken.

2. Zuführmodul nach Anspruch 1, wobei das Gehäuse (30) mehrere Auslassöffnungen der Einlassgase (24) zum Motor, die sogenannten Einlassöffnungen, aufweist, und wobei die Abflussöffnungen (34) durch alle oder einen Teil der Einlassöffnungen (24) gebildet sind.

3. Zuführmodul nach einem der Ansprüche 1 oder 2, das konfiguriert ist, so dass die Öffnungen (44) bei Verwendung auf einem höheren Niveau als jenes der Abflussöffnungen (34) in das Durchgangsvolumen (32) münden.

4. Zuführmodul nach einem der vorhergehenden Ansprüche, wobei die Öffnungen (44) linear verteilt sind und dabei voneinander beabstandet sind, und sich die Rinnen (46) in Richtung der Abflussöffnungen von einem Raum (50) erstrecken, der zwischen den Öffnungen (44) vorgesehen ist.

5. Zuführmodul nach einem der vorhergehenden Ansprüche, wobei die Öffnungen (44) von Kragen (52) umgeben sind, die ins Innere des Durchgangsvolumens (32) vorspringen.

6. Zuführmodul nach einem der vorhergehenden Ansprüche, wobei das Gehäuse (30) einen anderen Einlass (54) für die Einlassgase, den sogenannten Einlass für die gekühlten Einlassgase, aufweist, der in das Durchgangsvolumen (32) mündet.

7. Zuführmodul nach Anspruch 6, das konfiguriert ist, so dass der Einlass (54) bei Verwendung für die gekühlten Einlassgase über dem Drainageteil (42) angeordnet ist.

8. Zuführmodul nach einem der vorhergehenden Ansprüche, ferner umfassend eine Einspritzleitung (62), um einen Strom von rückgeführten Abgasen in den Gaseinlassstrom einzuspritzen.

9. Zuführmodul nach einem der vorhergehenden Ansprüche, wobei das Gehäuse (30) (eine) Einlassöffnung(en) (64) für rückgeführte Abgase aufweist, die auf einer Fläche vorgesehen ist/sind, die den Abflussöffnungen (34) gegenüberliegt.

10. Zuführmodul nach Anspruch 2 oder einem der Ansprüche 3 bis 9, wenn sie von dem Anspruch 2 abhängen, wobei das Gehäuse (30) Leitungen (65) aufweist, die nach außen vorstehen, und alle oder ein Teil der Einlassöffnungen (24) am mündenden Ende der vorstehenden Leitungen (65) angeordnet sind.

11. Zuführmodul nach Anspruch 10, wobei das Gehäuse (30) eine Auslassfläche (58) aufweist, die dazu bestimmt ist, sich gegenüber dem Motor zu befinden, und die vorstehende(n) Leitung(en) (65) aus der Auslassfläche (58) des Kollektorgehäuses hervorgeht/hervorgehen.

## Claims

1. Gas intake module (1) for the intake of gases into a motor vehicle combustion engine, comprising a heat exchanger (6) and a gas distribution manifold (2), the said manifold comprising a casing (30) able to be mounted on the engine and defining a passage volume (32) for the passage of a flow of intake gases towards the engine, **characterized in that** the said casing (30) has through-orifices (34) communicating with the said passage volume (32), the said casing being configured to allow a flow of condensates in the direction of the said orifices (34), called flow orifices, under the action of gravity, the said casing (30) comprising an inlet (36), termed inlet for the non-cooled intake gases, the said manifold being made able to allow an introduction of intake gases, termed non-cooled intake gases, into a lower part of the passage volume (32) from the said inlet (36) for the intake gases, and wherein the casing (30) has a part (42), termed drainage part, configured to promote a flow of the condensates towards the flow orifices (34) rather than towards the inlet (36) for the non-cooled intake gases, the inlet (36) for the non-cooled intake gases comprising a plurality of apertures (44) opening into the passage volume (32) for the introduction of the non-cooled intake gases into the latter at the said drainage part (42), the latter being provided with channels (46) extending from the apertures (44) towards the flow orifices (34).

2. Intake module according to Claim 1, in which the casing (30) comprises a plurality of orifices (24), termed intake orifices, for the outlet of the intake gases towards the engine, and in which the said flow orifices (34) are constituted by all or part of the intake orifices (24)

3. Intake module according to either one of Claims 1 and 2 configured such that, in use, the apertures (44) open into the passage volume (32) at a higher level than that of the flow orifices (34).

4. Intake module according to one of the preceding claims, in which the apertures (44) are distributed linearly while being spaced from one another and the said channels (46) extend in the direction of the flow orifices from a space (50) provided between the said apertures (44).

5. Intake module according to any one of the preceding claims, in which the apertures (44) are bordered by flanges (52) projecting inside the passage volume (32).

6. Intake module according to any one of the preceding claims, in which the said casing (30) comprises another inlet (54) for the intake gases, termed inlet for the cooled intake gases, opening into the said passage volume (32).

7. Intake module according to Claim 6 configured such that, in use, the said inlet (54) for the cooled intake gases is situated above the said drainage part (42).

8. Intake module according to any one of the preceding claims additionally comprising an injector duct (62) for injecting a flow of recirculated exhaust gases into the flow of intake gases.

9. Intake module according to any one of the preceding claims, in which the casing (30) comprises one or more inlet orifices (64) for recirculated exhaust gases that are provided on an opposite face to the flow orifices (34).

10. Intake module according to Claim 2 or any one of Claims 3 to 9 when they are dependent on Claim 2, in which the casing (30) comprises externally projecting ducts (65) and all or part of the intake orifices (24) are situated at the emerging end of the said projecting ducts (65).

11. Intake module according to Claim 10, in which the casing (30) comprises an outlet face (58) intended to be situated facing the engine, and the projecting duct or ducts (65) emanate from the outlet face (58) of the manifold casing.
